# EUROPEAN PATENT SPECIFICATION

(11) **EP 1 213 121 B1**
(45) Date of publication and mention of the grant of the patent: **28.12.2005**
(21) Application number: 01308653.3
(22) Date of filing: 10.10.2001
(51) Int. Cl.: B29C 47/02

(54) **Process and apparatus for coating belt cord with rubber**
Verfahren und Vorrichtung zur Beschichtung von Gürtelfäden mit Gummi
Procédé et dispositif pour le revêtement de cordes de ceinture par du caoutchouc

(30) Priority: 12.10.2000 JP 2000312079
(43) Date of publication of application: 12.06.2002
(73) Proprietor: Bridgestone Corporation, Tokyo 104-0031 (JP)
(72) Inventor: Suda, Nobuyuki, c/o Bridgestone Corp.Techn.Ctr., Kodaira-City, Tokyo (JP)
(74) Representative: Whalley, Kevin

(56) References cited:
- EP-A- 0 478 258
- EP-A- 0 619 170
- DE-A- 19 545 079
- US-A- 4 126 720
- US-A- 4 300 878
- US-A- 5 374 324

## Description

This invention relates to a process and an apparatus for coating a belt cord made of steel filaments for a belt layer as a reinforcement for a tread portion of a pneumatic tire with rubber and attains weight reduction of the belt layer and hence the tire through thinning of such a coating rubber.

In general, the rubber coating for the conventional belt cord made of twisted steel filaments is carried out by a hot calender system wherein four calender rolls are used to conduct the formation of a rubber sheet and the contact bonding of the rubber sheet to the belt cord, a cord calender system wherein a rubber sheet formed by a sheeting calender of another line is contact-bonded to the belt cord by a coating calender, a semi-hot claender system wherein the formation of a rubber sheet and the contact bonding thereof are carried out on a line by using separate rolls, or the like.

In any one of these systems, a relative distance between comb roll or the like arranging plural belt cords in a line and a pair of press rolls contact-bonding the rubber sheet to these cords becomes necessarily large in accordance with the size, arranging state and the like of the press roll and the sheeting roll, so that the mutually arranging state of these cords after the rubber coating is not frequently obtained as is desired and hence the uniformity of strength in the belt layer is damaged and it is apt to easily cause the bending of the belt layer in a direction perpendicular to the extending direction of the cord. And also, the belt cord is easily peeled off from the coating rubber at such a region that the arranging density of the cords becomes high.

In the conventional calender systems, it is essential to shape the rubber material into the sheet once, so that it is very difficult to extremely thin the thickness of the rubber sheet. As a result, the thickness of the coating rubber to the belt cord becomes necessarily thick and it is obliged to increase the weight of the belt layer and hence the weight of the tire.
A method of forming a reinforcing fabric and in particular a body ply for a radial tire is disclosed in US 4,126,720, EP-A2-0 478 258 and US 5,374,324.

It is, therefore, an object of the invention to solve the aforementioned problems of the conventional technique and to provide a process and an apparatus for coating a belt cord with rubber in which the cord arrangement in a rubber layer after the rubber coating is made regular and the uniformity of strength in the belt layer is enhanced to sufficiently eliminate risks such as bending of the belt layer, peeling of the belt cord and the like and also the weight reduction of the belt layer and the tire can advantageously be realized by decreasing the thickness of the coating rubber to the belt cord, if necessary.

According to a first aspect of the invention, there is the provision of a process for coating a belt cord with rubber comprising
- aligning a plurality of belt cords (C) each made of a steel filament as a cord unit,
- arranging a plurality of said cord units in parallel to each other at a given pitch in the same plane, and
- integrally coating all cords with an uncured rubber (R) at a given outer profile shape through an insulation system under movement of the cord in its axial direction immediately after the arrangement of said cord units in line, characterized in that the process further comprises aligning said belt cords (c) by passing a plurality of the belt cords through each of a plurality of holes and contacting the plurality of belt cords with each other over a full length thereof prior to coating the belt cords.

According to this process, the uncured rubber is directly coated onto all of the belt cords through the insulation system without shaping into a rubber sheet immediately after the arrangement of these cords in line, so that these cords can be subjected to rubber coating prior to the occurrence of disorder in the cord arrangement in line and hence the disorder of the cords in the coating rubber layer can sufficiently be prevented. And also, the thickness of the coating rubber can simply and easily be made to an expected value, so that the gauge of the coating rubber including the belt cord can be reduced to about 2/3 of the gauge in the conventional technique.

Since the steel filament is used as the belt cord, the twisting work for the belt cord becomes useless and hence the working efficiency for the formation of the cord is largely improved. And also, the extensible deformation of the belt cord resulted from the twisting can effectively be prevented. Furthermore, the cord diameter is made thinner than that of the twisted cord, so that the gauge of the coating rubber including the belt cord can be more reduced to effectively attain the weight reduction of the belt layer.

In addition, the cord unit comprised of plural steel filaments is coated with rubber, so that the same properties as in the single twisted cord can be given to the cord unit. Further, individual cords in the cord unit are contacted with each other over full length thereof, and these cord units are extended in parallel to each other at a given pitch in the same plane, so that the rigidity of the belt layer can be enhanced to effectively improve the performances and durable life of the tire.

Moreover, the plural cord units subjected to rubber coating by the process according to the invention are successively cut at a given inclination angle corresponding to a required extending angle of the belt cord every a length corresponding to a required belt width, and then side edges of such band-shaped cuts are regularly joined to each other under a constant outer profile form for the formation of the belt layer.

From a viewpoint of the weight reduction of the belt layer, it is possible to reduce the weight as the diameter of the belt cord becomes thinner, but when the diameter is too thin, the end count of the cord increases for holding the belt strength and hence the distance between the cords becomes narrower and the resistance to peeling at the end of the belt lowers. On the other hand, when the diameter is too thick, strain produced between the belt cord and the coating rubber increases in the bending deformation of the belt layer and hence the cord is easily bent at a large deformation. For this end, a filament diameter of the belt cord is preferable to be within a range of 0.18-0.35 mm.

Further, it is favorable that a gauge of the uncured coating rubber including the belt cord is within a range of 0.5-1.2 mm in order to effectively attain the further weight reduction of the belt layer.

According to a second aspect of the invention, there is the provision of an apparatus for coating belt cords with rubber comprising an insulator head (4) arranged at an end of a cylinder (3) provided with a screw in an extruder (1) for an uncured rubber, an inserter (5) for guiding plural belt cords (C) so as to pass them at a required relative posture, and a die (6) for coating the belt cords after the pass through the inserter with an uncured rubber (R) supplied from the cylinder at a required outer profile shape, characterized in that the inserter (5) is arranged in the insulator head and is provided with a plurality of oval-shaped holes (5a) through each of which a plurality of the belt cords (c) are able to pass, the profile of each hole being such that the relative posture of the cords is maintained and the cords remain in contact with each other over a full length thereof.

The apparatus according to the invention is suitable for carrying out the above coating process. In this apparatus, a rubber material fed into the extruder is warmed in the cylinder and extruded through the die at the insulator head in the required outer profile shape, while the plural belt cords arranged at the relative posture in the inserter in line are passed through the die, whereby each of these cords immediately after the pass through the inserter is coated with the warmed rubber material in the die or uncured rubber. In this way, the rubber coating for each of these cords arranged in line by the inserter is ensured, and also the gauge of the coating rubber can be thinned as it is expected without fearing the peeling of the coating rubber from the cord or the like.

In a preferable embodiment of the second aspect, a pressure sensor for the uncured rubber is arranged in the insulator head. In this case, results detected by the sensor are fed back to a rotating speed of the screw in the cylinder to maintain the pressure of the uncured rubber in the die at a constant value, whereby the gauge of the uncured coating rubber extruded through the die or the like can be held constant to more stability the quality of the rubber coated product.

In another preferable embodiment of the second aspect, the inserter is provided with plural holes each passing a plurality of belt cords as a cord unit and specifying the relative posture of these cords every the cord unit.

In this case, the cords can be subjected to rubber coating while holding the relative posture of the cords as a cord unit at a constant state, and also the relative posture can be maintained in a longitudinal direction of the cord and between the cord units, whereby the quality of the rubber coated product can be more stabilized.

On the other hand, if the conventional comb roller having plural annular grooves or recesses is used instead of the inserter and plural belt cords as a cord unit are guided by each of the grooves or recesses, it is substantially impossible to maintain the relative posture of the cords at a constant state in the longitudinal direction of the cord and between the cord units because the position of each cord can not effectively be controlled only by the groove or the like, and hence there is caused the scattering in the quality and the tire performances.

The invention will be described with reference to the accompanying drawings, wherein:
FIG. 1A is a diagrammatically perspective view of an embodiment of the apparatus according to the invention;
FIG. 1B is a diagrammatically section view taken along a line I-I of FIG. 1A;
FIG. 2A is a diagrammatically partial section view illustrating an embodiment of the hole in the inserter according to the invention taken along a line II-II of FIG. 1B;
FIG. 2B is a schematic view of another embodiment of the hole in the inserter according to the invention;
FIG. 3 is a partial perspective view illustrating a state of passing belt cords through holes in the inserter according to the invention; and
FIG. 4A is a partial schematic view of an embodiment of the belt layer according to the invention; and
FIG. 4B is a diagrammatically partial section view taken along a line IV-IV of FIG. 4A.

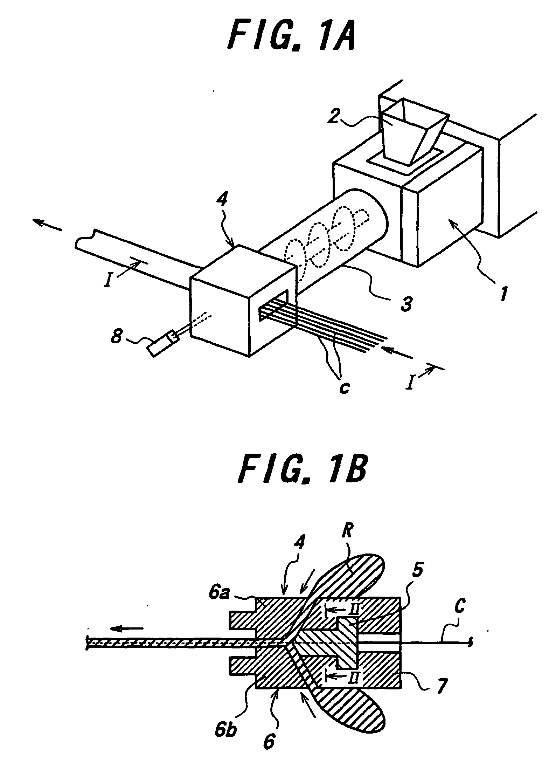

In FIGS. 1A and 1B is shown an embodiment of the apparatus for rubber coating according to the invention. In this apparatus, an extruder 1 comprises a hopper 2 allowing to feed slitting rubber or other rubber material and a cylinder 3 provided therein with a screw. The rubber material is warmed under an action of the screw and transferred into a top of the cylinder 3.

To the top of the cylinder 3 is attached an insulator head 4. As shown in FIG. 1B, an inserter 5 for guiding plural belt cords C so as to pass at a required relative posture is arranged in the insulator head 4, and also a die 6 for coating the belt cords C after the pass through the inserter 5 with an uncured rubber R fed from the cylinder 3 at a required outer profile shape is arranged adjacent to the inserter 5 ahead thereof in the head 4.

The inserter 5 is incorporated into the head 4 whilst being held by an inserter holder 7, while the die 6 is comprised of an upper die portion 6a and a lower die portion 6b. A space zone between these portions 6a and 6b, particularly an outlet zone thereof specifies an outer profile shape including a gauge, width and the like of the uncured rubber R and hence the coating rubber including the cords. Moreover, the die 6 and the inserter holder 7 are at a state of restraining to each other, so that they do not relatively move in up-down direction and front-back direction.

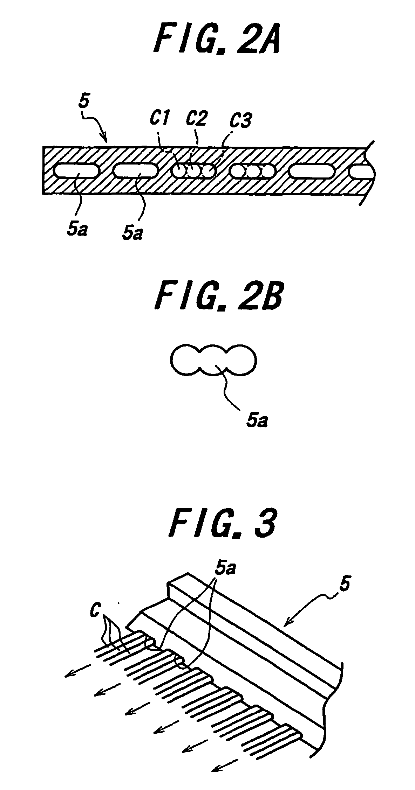

As shown in FIG. 2A, the inserter 5 is provided with a plurality of holes 5a, oval-shaped holes 5a in the illustrated embodiment each passing plural belt cords each made of a steel filament, three belt cords C1, C2, C3 in the illustrated embodiment as a cord unit and specifying a relative posture of these cords, wherein these holes 5a are arranged at a given interval in line and a peripheral wall of each hole 5a acts to effectively restrain the change of the relative posture of these cords C1, C2, C3. As the profile shape of the hole 5a, a necked part may be formed between the cords as shown in FIG. 2B, whereby the posture of the cord C1, C2, C3 can be specified more effectively.

In FIG. 3 is perspectively shown a state of passing the cords through the holes 5a formed in the inserter 5, wherein plural cord units, each of which units being comprised of three cords C arranged at the required relative posture in line by the peripheral wall of the hole 5a, are continuously drawn out from the holes 5a so as to extend in parallel to each other at a given pitch in the same plane.

On the other hand, the warmed uncured rubber R is supplied through the space zone between the die 6 and the inserter 5, and the individual cords immediately after the pass through the holes 5a are closely coated around their peripheries and integrally united with such an uncured rubber R, which is extruded from an outlet port of the die 6 at the required outer profile shape as shown in FIG. 1B.

Thus, the individual cords C arranged after the pass through the inserter 5 are immediately restrained by the uncured coating rubber R, whereby the disorder of these cords C can sufficiently be prevented. And also, the gauge of the coating rubber to the cord C can properly be adjusted by specifying the extrusion size to the warmed uncured rubber R through the die 6, if necessary, so that the gauge including the cord C can be made sufficiently thinner that that of the conventional technique.

In FIG. 1 A, numeral 8 is a pressure sensor attached to the insulator head 4 for measuring a pressure of the warmed uncured rubber R supplied to the space zone between the inserter 5 and the die 6. The results measured by the pressure sensor 8 can be fed back to, for example, a driving means for the screw in the cylinder 3 to control the rotating speed of the screw, whereby the pressure of the uncured rubber R can be adjusted to a given range to sufficiently enhance various dimensions of a band-shaped body extruded through the die 6 and comprised of the coating uncured rubber R and the belt cords C.

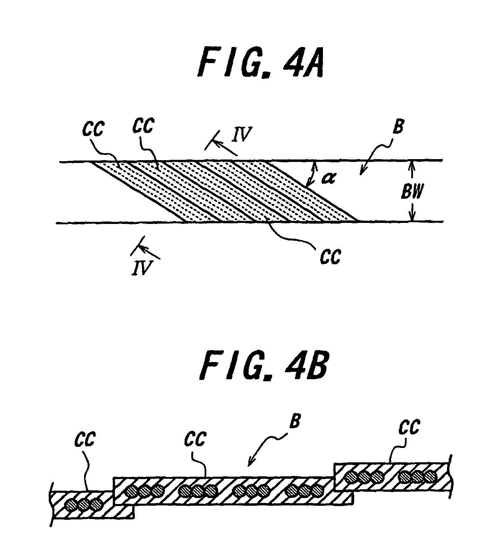

As shown in FIG. 4A, the band-shaped body formed by the above apparatus and comprised of the coating uncured rubber R and the belt cords C (e.g. steel filaments having a diameter of 0.2 mm) is successively cut at an inclination angle corresponding to a required extending angle α of the belt cord C every length corresponding to a required belt width BW, and then the band-shaped cuts CC are joined at their side edges to each other as shown in FIG. 4B, whereby a belt layer B can be formed at a given value of a gauge t of the coating rubber including the cord C, for example, a gauge t of 0.87 mm.

As mentioned above, according to the invention, the belt cords each comprised of a steel filament are integrally coated with the uncured rubber through the insulation system using the die immediately after these cords are arranged in line, whereby the arranging posture of these cords after the coating can be made as it is expected, and also the gauge of the coating rubber including the cord can be decreased, if necessary, to realize the weight reduction of the belt layer and hence the tire.

## Claims

1. A process for coating a belt cord with rubber comprising:
- aligning a plurality of belt cords (C) each made of a steel filament as a cord unit,
- arranging a plurality of said cord units in parallel to each other at a given pitch in the same plane, and
- integrally coating all cords with an uncured rubber (R) at a given outer profile shape through an insulation system under movement of the cord in its axial direction immediately after the arrangement of said cord units in line,
**characterized in that** the process further comprises aligning said belt cords (c) by passing a plurality of the belt cords through each of a plurality of holes and contacting the plurality of belt cords with each other over a full length thereof prior to coating the belt cords.

2. A process as claimed in claim 1, **characterized in that** the filament diameter of the belt cord (c) is within a range of 0.18-0.35 mm.

3. A process as claimed in claim 1 or 2, **characterized in that** the gauge of the uncured coating rubber (R) including the belt cord (c) is within a range of 0.5-1.2 mm.

4. Apparatus for coating belt cords with rubber comprising an insulator head (4) arranged at an end of a cylinder (3) provided with a screw in an extruder (1) for an uncured rubber, an inserter (5) for guiding plural belt cords (C) so as to pass them at a required relative posture, and a die (6) for coating the belt cords after the pass through the inserter with an uncured rubber (R) supplied from the cylinder at a required outer profile shape, **characterized in that** the inserter (5) is arranged in the insulator head and is provided with a plurality of oval-shaped holes (5a) through each of which a plurality of the belt cords (c) are able to pass, the profile of each hole being such that the relative posture of the cords is maintained and the cords remain in contact with each other over a full length thereof.

5. Apparatus as claimed in claim 4, wherein at least three cords (C1,C2, C3) pass through each hole (5a) in the inserter (5).

6. Apparatus as claimed in claim 4 or claim 5, wherein each hole (5a) has a profile with at least one necked part, the profile being shaped to maintain the alignment of the belt cords (c).

7. Apparatus as claimed in any of claims 4, 5 or 6, wherein a pressure sensor (8) for the uncured rubber (R) is arranged in or attached to the insulator head (4).

## Patentansprüche

1. Verfahren zum Beschichten eines Gürtelcords mit Kautschuk, das die folgenden Schritte umfasst:
- Ausrichten einer Mehrzahl von Gürtelcords (C), die jeweils aus einem Stahlfaden als Cordeinheit bestehen,
- Anordnen einer Mehrzahl der Cordeinheiten parallel zueinander mit einem bestimmten Abstand in derselben Ebene, und
- einstückiges Beschichten aller Corde mit einem ungehärteten Kautschuk (R) mit einer bestimmten Außenprofilgestalt durch ein Isolationssystem unter Bewegung des Cords in seiner axialen Richtung unmittelbar nach dem Anordnen der Cordeinheiten in einer Linie,
**dadurch gekennzeichnet, dass** das Verfahren ferner das Ausrichten der Gürtelcorde (c) durch Leiten einer Mehrzahl der Gürtelcorde durch jedes Loch aus einer Mehrzahl von Löchern und das Inkontaktbringen der Mehrzahl von Gürtelcorden miteinander über ihre volle Länge vor dem Beschichten der Gürtelcorde umfasst.

2. Verfahren nach Anspruch 1, **dadurch gekennzeichnet, dass** der Fadendurchmesser des Gürtelcords (c) in einem Bereich von 0,18 bis 0,35 mm liegt.

3. Verfahren nach Anspruch 1 oder 2, **dadurch gekennzeichnet, dass** die Dicke des ungehärteten Beschichtungskautschuks (R) einschließlich dem Gürtelcord (c) in einem Bereich von 0,5 bis 1,2 liegt.

4. Vorrichtung zum Beschichten von Gürtelcorden mit Kautschuk, die Folgendes umfasst: einen Isolatorkopf (4), der an einem Ende eines Zylinders (3) angeordnet ist, der mit einer Schnecke in einem Extruder (1) für einen ungehärteten Kautschuk ausgestattet ist, einen Einführer (5) zum Führen mehrerer Gürtelcorde (C), um sie in einer benötigten relativen Lage zu leiten, und eine Düse (6) zum Beschichten der Gürtelcorde nach dem Passieren durch den Einführer mit einem ungehärteten Kautschuk (R), der von dem Zylinder in einer benötigten Außenprofilgestalt zugeführt wird, **dadurch gekennzeichnet, dass** der Einführer (5) in dem Isolatorkopf angeordnet und mit einer Mehrzahl von ovalen Löchern (5a) versehen ist, durch die jeweils eine Mehrzahl von Gürtelcorden (c) passieren kann, wobei das Profil jedes Lochs derart ist, dass die relative Lage der Corde aufrechterhalten bleibt und die Corde über ihre volle Länge miteinander in Kontakt bleiben.

5. Vorrichtung nach Anspruch 4, bei der wenigstens drei Corde (C1, C2, C3) durch jedes Loch (5a) in dem Einführer (5) passieren.

6. Vorrichtung nach Anspruch 4 oder Anspruch 5, bei der jedes Loch (5a) ein Profil mit wenigstens einem verengten Teil hat, wobei das Profil so gestaltet ist, dass die Ausrichtung der Gürtelcorde (c) erhalten bleibt.

7. Vorrichtung nach Anspruch 4, 5 oder 6, bei der ein Drucksensor (8) für den ungehärteten Kautschuk (R) in dem Isolatorkopf (4) angeordnet oder daran angebracht ist.

## Revendications

1. Procédé de revêtement d'une corde de ceinture avec du caoutchouc comprenant:
- l'alignement d'une pluralité de cordes de ceinture (C), chacune constituée d'un filament d'acier formant une unité de corde,
- l'agencement d'une pluralité desdites unités de corde parallèlement les unes aux autres selon un pas donné dans le même plan, et
- le revêtement d'un seul tenant de toutes les cordes avec du caoutchouc non vulcanisé (R) selon une forme de profil extérieur donnée par l'intermédiaire d'un système d'isolation en déplaçant la corde dans sa direction axiale immédiatement après l'agencement en ligne desdites unités de cordes,
**caractérisé en ce que** le procédé comprend en outre l'alignement desdites cordes de ceinture (c) en faisant passer une pluralité de cordes de ceinture à travers chaque trou d'une pluralité de trous et en mettant en contact la pluralité des cordes de ceinture les unes avec les autres sur toute leur longueur préalablement au revêtement des cordes de ceinture.

2. Procédé comme revendiqué dans la revendication 1, **caractérisé en ce que** le diamètre de filament de la corde de ceinture (c) est compris dans le domaine de 0,18-0,35 mm.

3. Procédé comme revendiqué dans la revendication 1 ou 2, **caractérisé en ce que** l'épaisseur du caoutchouc de revêtement non vulcanisé (R) comprenant la corde de ceinture (c) est comprise dans le domaine de 0,5-1,2 mm.

4. Appareil pour le revêtement de cordes de ceinture avec du caoutchouc comprenant une tête d'isolation (4) agencée à une extrémité d'un cylindre (3) pourvue d'une vis dans une extrudeuse (1) pour un caoutchouc non vulcanisé, un dispositif d'insertion (5) pour guider plusieurs cordes de ceinture (C) de manière à les faire passer en une position relative requise, et une filière (6) pour revêtir les cordes de ceinture après le passage à travers le dispositif d'insertion avec un caoutchouc non vulcanisé (R) fourni par le cylindre selon une forme de profil extérieur requis, **caractérisé en ce que** le dispositif d'insertion (5) est agencé dans la tête d'isolation et est pourvu d'une pluralité de trous en forme ovale (5a) à travers chacun desquels plusieurs cordes de ceinture (c) sont capables de passer, le profil de chaque trou étant tel que la position relative des cordes est maintenue et que les cordes restent en contact les unes avec les autres sur toute leur longueur.

5. Appareil comme revendiqué dans la revendication 4, dans lequel au moins trois cordes (C1, C2, C3) passent à travers chaque trou (5a) dans le dispositif d'insertion (5).

6. Appareil comme revendiqué dans la revendication 4 ou 5, dans lequel chaque trou (5a) possède un profil avec au moins une partie de goulot, le profil étant configuré pour maintenir l'alignement des cordes de ceinture (c).

7. Appareil comme revendiqué dans une quelconque des revendications 4, 5 ou 6, dans lequel un capteur de pression (8) pour le caoutchouc non vulcanisé (R) est agencé dans ou attaché à la tête d'isolation (4).
